# FASCICULE DE BREVET EUROPEEN

(11) **EP 2 993 745 B1**
(45) Date de publication et mention de la délivrance du brevet: **11.11.2020**
(21) Numéro de dépôt: 15182211.1
(22) Date de dépôt: 24.08.2015
(51) Int. Cl.: F16B 7/04, H02B 1/01, F16B 7/18

(54) **STRUCTURE POUR UNE INSTALLATION ÉLECTRIQUE D'UN VÉHICULE FERROVIAIRE ET VÉHICULE FERROVIAIRE ASSOCIÉ**
STRUKTUR FÜR EINE ELEKTRO-ANLAGE EINES SCHIENENFAHRZEUGS, UND ENTSPRECHENDES SCHIENENFAHRZEUG
STRUCTURE FOR AN ELECTRICAL INSTALLATION OF A RAIL VEHICLE AND ASSOCIATED RAIL VEHICLE

(30) Priorité: 04.09.2014 FR 1458302
(43) Date de publication de la demande: 09.03.2016
(73) Titulaire: ALSTOM Transport Technologies, 93400 Saint-Ouen (FR)
(72) Inventeur: DELVAL, Damien, 59600 ASSEVENT (FR); DUTRANOIT, Eric, 6032 MONT-SUR-MARCHIENNE (BE)
(74) Mandataire: Lavoix

(56) Documents cités:
- EP-A1- 2 508 407
- WO-A1-2008/124909
- WO-A2-2012/039689
- CN-U- 201 946 878
- CN-U- 202 405 622
- CN-U- 202 474 571
- DE-U1- 9 212 031
- DE-U1- 29 712 998
- GB-A- 1 596 040
- US-A1- 2004 036 389

## Description

La présente invention concerne une structure pour une installation électrique d'un véhicule ferroviaire, du type comprenant une pluralité d'éléments profilés s'étendant chacun le long d'un axe longitudinal et formant une charpente de la structure, et une pluralité d'éléments d'assemblage des éléments profilés entre eux.

L'invention s'applique notamment aux structures destinées à recevoir des installations électriques à bord d'un véhicule ferroviaire.

EP 2 508 407 B1 décrit une structure pour des installations électriques embarquées à bord d'un véhicule ferroviaire. Une telle structure comprend une pluralité d'éléments profilés reliés entre eux par des éléments d'assemblage. Les éléments profilés et les éléments d'assemblage sont généralement des tôles pliées selon plusieurs axes pour pouvoir être assemblés entre eux afin de former une charpente de la structure.

Toutefois, une telle structure ne donne pas entière satisfaction.

En effet, une telle structure met en œuvre des éléments complexes qui en rendent la réalisation et l'installation difficiles, longues et coûteuses WO 2008/124909 A1 est l'état de la technique le plus proche de l'objet de la revendication 1 et divulgue le préambule de la revendication 1.

Un but de l'invention est de proposer une structure du type précité dont la réalisation et l'installation sont plus simples, plus rapides et moins coûteuses.

A cet effet, l'invention a pour objet une structure pour une installation électrique d'un véhicule ferroviaire du type précité, dans lequel les éléments profilés sont chacun monobloc en comportant une paroi externe venue d'une même matière, de section radiale fermée et continue.

En effet, le recours à de tels éléments profilés permet une réalisation rapide, simple et peu coûteuse d'une installation électrique, tout en lui conférant une grande solidité.

Suivant d'autres aspects avantageux de l'invention, la structure, comme définie par la revendication 1, comporte une ou plusieurs des caractéristiques suivantes
- les éléments profilés sont réalisés par extrusion ;
- les éléments profilés sont de section radiale rectangulaire ou carrée ;
- les éléments d'assemblage sont reliés aux éléments profilés par des rivets ;
- chaque élément d'assemblage est fixé à une zone d'extrémité d'un premier élément profilé et à la paroi externe d'un deuxième élément profilé, en contact avec ladite zone d'extrémité et avec ladite paroi externe ;
- au moins un élément d'assemblage est réalisé par pliage d'une tôle plane ;
- trois éléments profilés sont reliés entre eux au niveau de leur zone d'extrémité pour former un coin de la structure, les éléments profilés étant reliés deux à deux entre eux par au moins un élément d'assemblage, au moins l'un des éléments d'assemblage comportant une embase propre à être fixée à une surface porteuse d'un véhicule ferroviaire ;
- les éléments profilés et les éléments d'assemblage sont réalisés dans un matériau conducteur d'électricité, de préférence un métal, notamment de l'aluminium ;
- la pluralité d'éléments d'assemblage est constituée de seulement trois modèles d'éléments d'assemblage distincts, et la structure ne comporte pas d'autres éléments d'assemblage que ces trois modèles ;
- les éléments profilés et les éléments d'assemblage sont traités par un traitement de surface antioxydant.

En outre, l'invention a pour objet un véhicule ferroviaire comportant au moins une structure telle que définie ci-dessus pour recevoir au moins une installation électrique.

L'invention sera mieux comprise à l'aide de la description qui va suivre, donnée uniquement à titre d'exemple non limitatif et faite en se référant aux dessins annexés sur lesquels :
- la figure 1 est une vue en perspective de trois-quarts face d'une structure selon l'invention ;
- la figure 2 est un détail d'un angle de la structure de la figure 1 ;
- la figure 3 est un détail d'une partie de la structure de la figure 1 ;
- la figure 4 est une vue en perspective de trois-quarts face d'un premier élément d'assemblage de la structure de la figure 1 ;
- la figure 5 est une vue en perspective de trois-quarts face d'un deuxième élément d'assemblage de la structure de la figure 1 ; et
- la figure 6 est une vue en perspective de trois-quarts face d'un troisième élément d'assemblage de la structure de la figure 1.

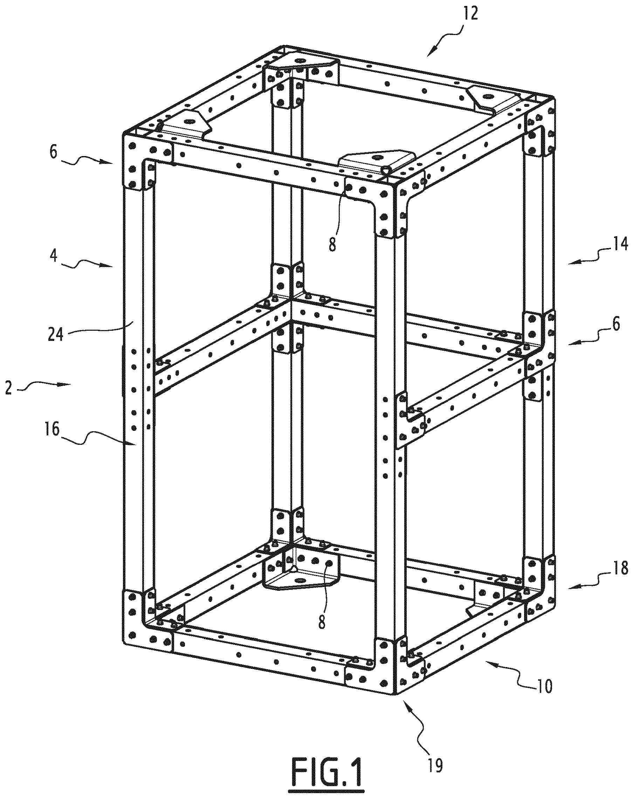

Une structure 2 pour une installation électrique d'un véhicule ferroviaire selon l'invention est représentée sur la figure 1.

La structure 2 comporte une pluralité d'éléments profilés 4. La structure 2 comporte en outre une pluralité d'éléments 6 d'assemblage des éléments profilés 4 entre eux. Les éléments d'assemblage 6 maintiennent les éléments profilés 4 par l'intermédiaire de rivets 8. Les éléments profilés 4 sont assemblés entre eux pour former une première base 10, une deuxième base 12, et un corps 14 de la structure 2 reliant les deux bases 10, 12 entre elles.

Chaque élément profilé 4 comporte une paroi externe 16 et deux zones d'extrémité 18 débouchant chacune sur une extrémité 19 de l'élément profilé 4.

Avantageusement, les éléments profilés 4 et les éléments d'assemblage 6 sont réalisés dans un matériau conducteur d'électricité, de préférence un métal, par exemple de l'aluminium.

Dans le cas d'éléments profilés 4 et d'assemblage 6 en aluminium, les éléments profilés 4 et les éléments d'assemblage 6 reçoivent au préalable un traitement de surface antioxydant.

Chaque élément profilé 4 s'étend le long d'un axe longitudinal propre.

De préférence, chaque élément profilé 4 est réalisé d'un seul tenant, par exemple réalisé par extrusion. Chaque élément profilé 4 est monobloc. En outre, la paroi externe 16 de chaque élément profilé 4 est venue d'une même matière, de section radiale fermée et continue.

De préférence, chaque élément profilé 4 est de section carrée ou rectangulaire, comme cela apparaît sur la figures 1, 2 et 3. La paroi externe 16 de chaque élément profilé 4 définit quatre faces 24 s'étendant le long de l'axe longitudinal de l'élément profilé 4.

Comme cela apparaît sur ces mêmes figures, les éléments d'assemblage 6 comprennent des plaques 26, des équerres 28 et des goussets 30. Seuls ces trois modèles d'éléments d'assemblage sont utilisés dans la structure 2.

Chaque élément d'assemblage 6 présente au moins deux ouvertures traversantes 31 débouchant sur chaque des faces de l'élément d'assemblage 6. Chaque ouverture traversante 31 reçoit un rivet 8 de fixation de l'élément d'assemblage 6 à l'élément profilé 4.

De préférence, chaque élément d'assemblage 6 est réalisé d'un seul tenant. Par exemple, l'équerre 28 et le gousset 30 sont réalisés par pliage d'une tôle.

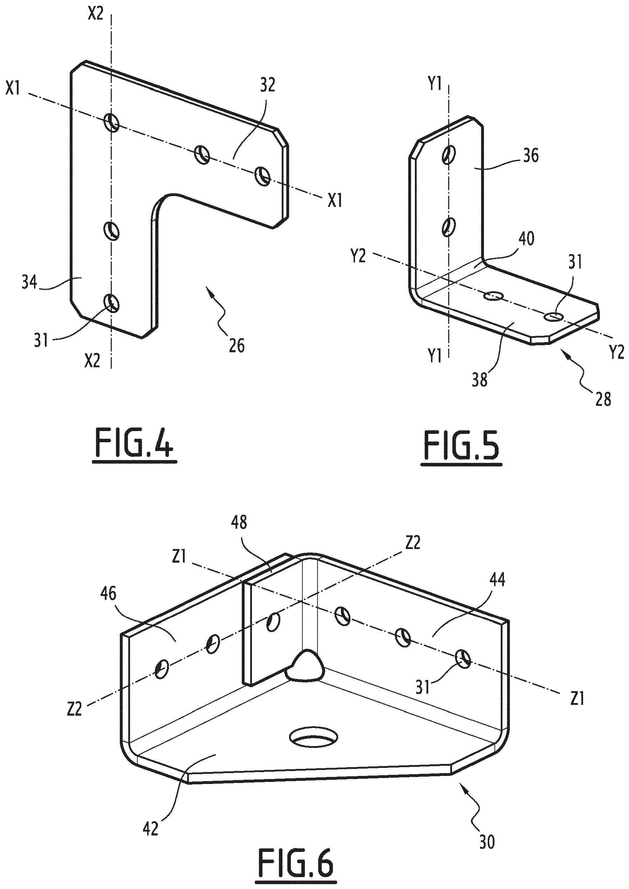

Chaque plaque 26, illustrée par la figure 4, est une pièce plane en L.

La plaque 26 comporte une première branche 32 et une deuxième branche 34. La première branche 32 et la deuxième branche 34 s'étendent chacune le long d'un axe longitudinal, respectivement X1-X1 et X2-X2. Les axes longitudinaux X1-X1 et X2-X2 sont orthogonaux entre eux.

Chaque équerre 28, illustrée par la figure 5, comprend une première lame 36 plane et une deuxième lame 38 plane. Les lames 36, 38 de l'équerre 28 sont jointives en une arête 40. Chaque lame 36, 38 de l'équerre 28 s'étend dans un plan le long d'un axe longitudinal, respectivement Y1-Y1 et Y2-Y2. Les axes Y1-Y1 et Y2-Y2 sont orthogonaux entre eux. Les plans associés respectivement à chacune des lames 36, 38 de l'équerre 28 sont orthogonaux.

Chaque gousset 30, illustré par la figure 6, comporte une embase 42 de support, une première plaque de fixation 44 et une deuxième plaque de fixation 46. L'embase 42 et chaque plaque 44, 46 sont planes et s'étendent chacune dans un plan correspondant. Les plans associés à l'embase 42 et à chaque plaque 44, 46 sont deux à deux orthogonaux. Les plaques de fixation 44, 46 font saillie, par rapport à l'embase de support 42, d'un même côté par rapport au plan associé à l'embase de support 42.

La première plaque de fixation 44 et la deuxième plaque de fixation 46 s'étendent chacune le long d'un axe longitudinal, respectivement Z1-Z1 et Z2-Z2. Les axes longitudinaux Z1-Z1 et Z2-Z2 sont orthogonaux entre eux.

La première plaque de fixation 44 comporte une languette 48 faisant saillie en équerre par rapport au plan de la première plaque de fixation 44 pour s'étendre en regard de la deuxième plaque de fixation 46, au contact de la face de la deuxième plaque 46 qui est orientée vers la première plaque de fixation 44.

Avantageusement, la languette 48 comporte une ouverture traversante 31 disposée en regard d'une ouverture traversante 31 correspondante de la deuxième plaque de fixation 46 pour accueillir un rivet 8 propre à traverser la languette 48 et la deuxième plaque de fixation 46.

La face de l'embase 42 qui est à l'opposé des faces orientées les unes vers les autres est dite « surface de support ».

L'étendue transversale des branches 32, 34 de la plaque 26, des lames 36, 38 de l'équerre 28 et des plaques de fixation 44, 46 du gousset est inférieure ou égale à la largeur des faces 24 des éléments profilés 4.

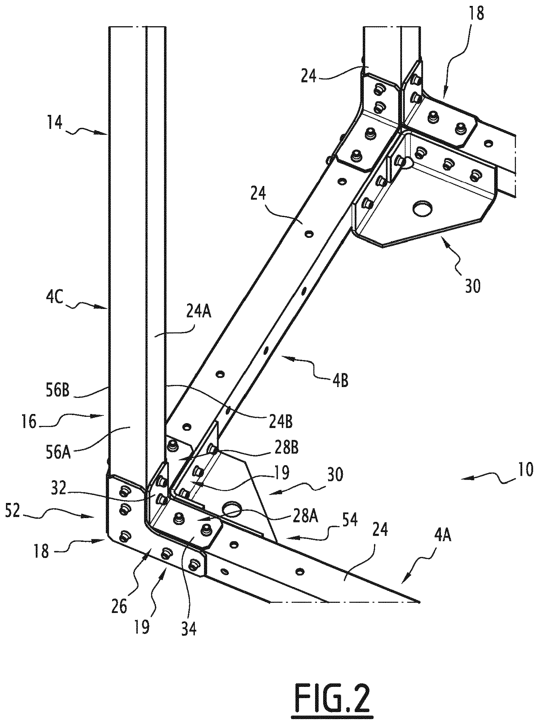

Comme cela apparaît sur la figure 2, un premier élément profilé 4A et un deuxième élément profilé 4B de la base 10 et un élément profilé 4C du corps 14 de la structure 2 forment un coin 52 de la structure 2.

En particulier, les deux éléments profilés 4A, 4B de la base 10 sont chacun au contact, par l'une de leurs extrémités 19, d'une même zone d'extrémité 18 de l'élément profilé 4C du corps 14 de la structure 2. Plus précisément :
- l'extrémité 19 du premier élément profilé 4A de la base 10 est au contact d'une première face 24A de l'élément profilé 4C du corps 14, au niveau de sa zone d'extrémité 18 ; et
- l'extrémité 19 du deuxième élément profilé 4B de la base 10 est au contact d'une deuxième face 24B de l'élément profilé 4C du corps 14, au niveau de sa zone d'extrémité 18, la deuxième face 24B étant adjacente à la première face 24A.

En outre, le premier élément profilé 4A et le deuxième élément profilé 4B de la base comportent deux faces 24 orientées l'une vers l'autre et qui définissent une surface d'accueil 54.

En outre, le premier élément profilé 4A de la base 10 et l'élément profilé 4C du corps 14 comportent deux faces respectives coplanaires et orientées vers l'extérieur de la structure 2, définissant une première surface externe 56A de la structure 2.

En outre, le deuxième élément profilé 4B de la base et l'élément profilé 4C du corps 14 comportent deux faces respectives coplanaires et orientées vers l'extérieur de la structure 2, définissant une deuxième surface externe 56B de la structure 2.

Les éléments profilés 4A, 4B, 4C sont reliés entre eux par une première équerre 28A, une deuxième équerre 28B, une première plaque 26A, une deuxième plaque 26 et un gousset 30.

La première équerre 28A est fixée aux éléments profilés 4A et 4C. Les faces des lames 36, 38 de la première équerre 28A qui sont à l'opposé des faces orientées l'une vers l'autre sont en contact avec la paroi 16 des éléments profilés 4A, 4C.

En particulier, la première lame 36 de la première équerre 28A est en contact avec la première face 24A de l'élément profilé 4C du corps 14. La deuxième lame 38 de la première équerre 28A est en contact avec la face 24 du premier élément profilé 4A qui est orientée vers la première face 24A de l'élément profilé 4C. La première équerre 28A est appliquée en butée contre chacune desdites faces 24, 24A.

En outre, la deuxième équerre 28B est fixée aux éléments profilés 4B et 4C, de manière analogue à la première équerre 28A.

En particulier, la première lame 36 de la deuxième équerre 28B est en contact avec la deuxième face 24B de l'élément profilé 4C. La deuxième lame 38 de la deuxième équerre 28B est appliquée au contact de la face 24 du deuxième élément profilé 4B qui est orientée vers la deuxième face 24B de l'élément profilé 4C. La deuxième équerre 28B est appliquée en butée contre chacune desdites faces 24, 24B.

Chaque équerre 28 est fixée aux éléments profilés 4 correspondants par l'intermédiaire des rivets 8, engagés dans les ouvertures traversantes 31 et dans des ouvertures traversantes correspondantes des éléments profilés 4A, 4B, 4C.

Chaque équerre 28 est disposée de sorte qu'elle ne fasse pas saillie transversalement par rapport aux faces 24 correspondantes des éléments profilés 4.

L'une des faces de la première plaque 26A est en regard de la première surface externe 56A, en contact avec la première surface externe 56A. La première plaque 26A est fixée aux faces 24 des éléments profilés 4A et 4C qui définissent la première surface externe 56A. Plus précisément, la première branche 32 de la première plaque 26A est fixée à l'élément profilé 4C. En outre, la deuxième branche 34 de la plaque 26A est fixée à l'élément profilé 4A.

La deuxième plaque 26 est fixée à la deuxième surface externe 56B, comme décrit ci-dessus pour la première plaque 26A. En particulier, l'une des faces de la deuxième plaque 26B est en regard de la deuxième surface externe 56B, en contact avec la deuxième surface externe 56B. La première branche 32 de la deuxième plaque 26 est fixée à l'élément profilé 4B. La deuxième branche 34 de la deuxième plaque 26 est fixée à l'élément profilé 4C.

Chaque plaque 26 est disposée de sorte qu'elle ne fasse pas saillie transversalement par rapport aux faces 24 correspondantes des éléments profilés 4.

Le gousset 30 est fixé aux éléments profilés 4A et 4B.

Les faces des plaques de fixation 44, 46 du gousset 30 qui sont à l'opposé des faces orientées l'une vers l'autre sont en contact avec la surface d'accueil 54. En particulier, la première plaque 44 est en regard de la face 24 de l'élément profilé 4A définissant la surface d'accueil 54, en contact avec ladite face 24. La deuxième plaque 46 est en regard de la face 24 de l'élément profilé 4B définissant la surface d'accueil 54, en contact avec ladite face 24.

Les plaques de fixation 44, 46 du gousset 30 sont appliquées au contact de la surface d'accueil 54, en butée contre chacune des faces 24 formant la surface d'accueil 54. Le gousset 30 est disposé de sorte que les plaques de fixation 44, 46 ne fassent pas saillies transversalement par rapport aux faces 24 formant la surface d'accueil 54.

Le gousset 30 est également disposé de sorte que sa surface de support soit orientée vers l'extérieur de la structure 2.

En outre, le gousset 30 est disposé de sorte que l'embase de support 42 du gousset 30 ne fasse pas saillie vers l'extérieur de la structure 2 par rapport aux éléments profilés formant la base 10 de la structure 2.

Chaque plaque de fixation 44, 46 est fixée à l'élément profilé 4 correspondant par l'intermédiaire des rivets 8, engagés dans les ouvertures traversantes 31 et dans des ouvertures traversantes correspondantes des éléments profilés 4A, 4B.

L'agencement décrit ci-dessus pour le coin 52 représenté sur la figure 2 est répété pour tous les coins de la structure 2.

Chaque coin 52 est propre à assurer la fixation de la structure 2 à une partie porteuse d'un véhicule ferroviaire, par l'intermédiaire des embases de support 42 des goussets 30.

Notamment, la surface de support du gousset 30 est propre à être appliquée au contact d'une surface porteuse d'un véhicule ferroviaire, le gousset 30 étant alors fixé à la surface porteuse, par exemple fixé par des rivets.

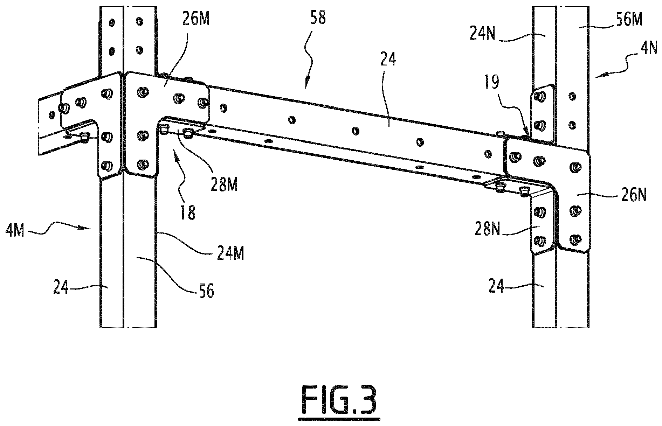

Comme illustré sur la figure 3, un élément profilé 4 forme une traverse 58 de la structure 2 entre un premier élément profilé 4M et un deuxième élément profilé 4N du corps 14.

En particulier, les deux éléments profilés 4M, 4N du corps 14 s'étendent parallèlement l'un à l'autre. Des faces 24M, 24N des éléments profilés 4M, 4N, respectivement, sont en regard l'une de l'autre, à distance l'une de l'autre. Les faces 24M, 24N sont parallèles entre elles.

La traverse 58 s'étend orthogonalement aux éléments profilés 4M, 4N du corps 14. En outre, la traverse 58 est fixée par chacune de ses zones d'extrémité 18 à un élément profilé 4M, 4N du corps 14. Plus précisément, l'une des extrémités 19 de la traverse 58 est au contact de la face 24M de l'élément profilé 4M du corps 14. En outre, l'autre des extrémités 19 de la traverse 58 est au contact de la face 24N de l'élément profilé 4N du corps 14.

Les trois faces coplanaires et orientées vers l'extérieur de la structure 2 des éléments profilés 4M, 4N et de la traverse 58 définissent une surface 56M.

Les éléments profilés 4 et la traverse 58 sont reliés entre eux par l'intermédiaire de de deux plaques 26M, 26N, d'une troisième équerre 28M et d'une quatrième équerre 28N.

La troisième équerre 28M est fixée à l'élément profilé 4M et à la traverse 58. Plus précisément, la troisième équerre 28M est fixée à la face 24M de l'élément profilé 4M du corps 14 et à la face 24 de la traverse 58 qui est orientée vers la face 24M de l'élément profilé 4M du corps 14, de façon analogue aux équerres 28A, 28B. L'équerre 28M est appliquée en butée contre chacune desdites faces 24, 24M.

La quatrième équerre 28N est fixée à l'élément profilé 4N et à la traverse 58. Plus précisément, la quatrième équerre 28N est fixée à la face 24N de l'élément profilé 4N du corps 14 et à la face 24 de la traverse 58 qui est orientée vers la face 24N de l'élément profilé 4N du corps 14. De préférence, la quatrième équerre 28N est disposée, par rapport à la traverse 58, du même côté que la troisième équerre 28M. La quatrième équerre 28N est appliquée en butée contre chacune desdites faces 24, 24N.

Chaque équerre 28 est disposée de façon à ce qu'elle ne fasse pas saillie transversalement par rapport aux faces 24 correspondantes des éléments profilés 4 et de la traverse 58.

Les plaques 26M, 26N sont fixées aux éléments profilés 4M, 4N du corps 14 et à la traverse 58 au niveau d'une surface externe 56M de la structure 2. Les plaques 26M, 26N sont fixées aux éléments profilés 4M, 4N et à la traverse 58 de manière analogue aux plaques 26 des coins 52.

Chaque plaque 26 et chaque équerre 28 est fixée aux éléments profilés 4 correspondants et à la traverse 58 par l'intermédiaire des rivets 8, engagés dans les ouvertures traversantes 31 et dans des ouvertures traversantes correspondantes des éléments profilés 4 et de la traverse 58.

Les éléments profilés 4 monoblocs dont la paroi externe 16 est venue d'une même matière, de section radiale fermée et continue, présentent des moments quadratiques plus élevés que les éléments profilés réalisés par pliage de tôle de l'état de la technique, ce qui confère une plus grande rigidité à la structure 2.

Pour des moments quadratiques égaux à ceux des éléments profilés de l'état de la technique, les éléments profilés 4 de l'invention présentent une masse moindre, ce qui conduit à des structures 2 plus légères et moins coûteuses.

En outre, le traitement de surface des éléments profilés 4 et des éléments d'assemblage 6 assure une continuité électrique entre les éléments profilés 4 et les éléments d'assemblage 6 lorsqu'ils sont mis en contact.

## Revendications

1. Structure (2) pour une installation électrique d'un véhicule ferroviaire, du type comprenant une pluralité d'éléments profilés (4) s'étendant chacun le long d'un axe longitudinal et formant une charpente de la structure (2), et une pluralité d'éléments (6) d'assemblage des éléments profilés (4) entre eux, les éléments profilés formant une première base (10), une deuxième base (12) et un corps (14) reliant les deux bases (10, 12) entre elles, les éléments profilés (4) étant chacun monobloc en comportant une paroi externe (16) venue d'une même matière, de section radiale fermée et continue,
la structure comprenant au moins un élément profilé formant traverse (58) entre un premier élément profilé (4M) et un deuxième élément profilé (4N), les premier et deuxième éléments profilés (4M, 4N) appartenant au corps,
**caractérisée en ce que** la pluralité d'éléments d'assemblage (6) est constituée de seulement trois modèles d'éléments d'assemblage distincts, la structure (2) ne comportant pas d'autres éléments d'assemblage (6) que ces trois modèles,
les trois modèles d'éléments d'assemblage étant des plaques (26), des équerres (28) et des goussets (30),
chaque plaque (26) étant une pièce plane en forme de L, chaque plaque (26) comportant une première branche (32) et une deuxième branche (34), la première branche (32) et la deuxième branche (34) s'étendant chacun le long d'un axe longitudinal, les axes longitudinaux étant orthogonaux entre eux,
chaque équerre (28) comprenant une première lame (36) plane et une deuxième lame (38) plane jointives en une arête (40), chaque lame (36, 38) de l'équerre (28) s'étendant dans un plan le long d'un axe longitudinal (Y1-Y1,Y2-Y2), lesdits axes longitudinaux (Y1-Y1, Y2-Y2) étant orthogonaux entre eux, les plans associés respectivement à chacune des lames (36, 38) de l'équerre (28) étant orthogonaux,
chaque gousset (30) comportant une embase (42) de support, une première plaque de fixation (44) et une deuxième plaque de fixation (46), l'embase (42) et chaque plaque de fixation (44, 46) étant planes et s'étendant chacune dans un plan correspondant, les plans associés à l'embase (42) et à chaque plaque (44, 46) étant deux à deux orthogonaux, les plaques de fixation (44, 46) faisant saillie, par rapport à l'embase de support (42), d'un même côté par rapport au plan associé à l'embase de support (42), la première plaque de fixation (44) comportant une languette (48) faisant saillie en équerre par rapport au plan de la première plaque de fixation (44) pour s'étendre en regard de la deuxième plaque de fixation (46), au contact de la face de la deuxième plaque (46) qui est orientée vers la première plaque de fixation (44).

2. Structure (2) selon la revendication 1, **caractérisée en ce que** les éléments profilés (4) sont réalisés par extrusion.

3. Structure (2) selon la revendication 1 ou 2, **caractérisée en ce que** les éléments profilés (4) sont de section radiale rectangulaire ou carrée.

4. Structure (2) selon l'une quelconque des revendications précédentes, **caractérisée en ce que** les éléments d'assemblage (6) sont reliés aux éléments profilés (4) par des rivets (8).

5. Structure (2) selon l'une quelconque des revendications précédentes, **caractérisée en ce que** chaque élément d'assemblage (6) est fixé à une zone d'extrémité (18) d'un premier élément profilé (4) et à la paroi externe (16) d'un deuxième élément profilé (4), en contact avec ladite zone d'extrémité (18) et avec ladite paroi externe (16).

6. Structure (2) selon l'une quelconque des revendications précédentes, **caractérisée en ce qu'**au moins un élément d'assemblage (6) est réalisé par pliage d'une tôle plane.

7. Structure (2) selon l'une quelconque des revendications précédentes, **caractérisée en ce que** trois éléments profilés (4) sont reliés entre eux au niveau de leur zone d'extrémité (18) pour former un coin (52) de la structure (2), les éléments profilés (4) étant reliés deux à deux entre eux par au moins un élément d'assemblage (6), au moins l'un des éléments d'assemblage (6) comportant une embase (42) propre à être fixée à une surface porteuse d'un véhicule ferroviaire.

8. Structure (2) selon l'une quelconque des revendications précédentes, **caractérisée en ce que** les éléments profilés (4) et les éléments d'assemblage (6) sont réalisés dans un matériau conducteur d'électricité, de préférence un métal, notamment de l'aluminium.

9. Structure (2) selon l'une quelconque des revendications précédentes, **caractérisée en ce que** les éléments profilés (4) et les éléments d'assemblage (6) sont traités par un traitement de surface antioxydant.

10. Véhicule ferroviaire, **caractérisé en ce qu'**il comporte au moins une structure (2) selon l'une quelconque des revendications précédentes pour recevoir au moins une installation électrique.

## Patentansprüche

1. Struktur (2) für eine elektrische Installation eines Schienenfahrzeugs, des Typs aufweisend eine Mehrzahl von Profilelementen (4), die sich jeweils entlang einer Längsachse erstrecken und ein Tragwerk der Struktur (2) bilden, und eine Mehrzahl von Elementen (6) zum Zusammenbau der Profilelemente (4) untereinander, wobei die Profilelemente eine erste Basis (10), eine zweite Basis (12) und einen Körper (14) bilden, der die beiden Basen (10, 12) miteinander verbindet, wobei die Profilelemente (4) jeweils aus einem Stück sind bei Aufweisen einer damit stofflich einstückigen Außenwand (16), mit geschlossenem durchgehendem Radialquerschnitt,
wobei die Struktur aufweist wenigstens ein eine Querstrebe bildendes Profilelement (58) zwischen einem ersten Profilelement (4M) und einem zweiten Profilelement (4N), wobei das erste und das zweite Profilelement (4M, 4N) zum Körper gehören,
**dadurch gekennzeichnet ist, dass**
die Mehrzahl von Elementen zum Zusammenbau (6) gebildet ist von nur drei unterschiedlichen Elementbauarten zum Zusammenbau, wobei die Struktur (2) keine anderen Elemente zum Zusammenbau (6) hat als diese drei Bauarten,
wobei die drei Elementbauarten zum Zusammenbau Platten (26), Winkel (28) und Achselstücke (30) sind,
wobei jede Platte (26) ein flaches Bauteil in L-Form ist, wobei jede Platte (26) einen ersten Schenkel (32) und einen zweiten Schenkel (34) aufweist, wobei der erste Schenkel (32) und der zweite Schenkel (34) sich jeweils entlang einer Längsachse erstrecken, wobei die Längsachsen senkrecht zueinander sind,
wobei jeder Winkel (28) ein erstes flaches Blatt (36) und ein zweites flaches Blatt (38) aufweist, die an einer Kante (40) aneinandergesetzt sind, wobei jedes Blatt (36, 38) des Winkels (28) sich in einer Ebene entlang einer Längsachse (Y1-Y1, Y2-Y2) erstreckt, wobei die Längsachsen (Y1-Y1, Y2-Y2) zueinander orthogonal sind, wobei die Ebenen, die jeweils einem jeweiligen der Blätter (36, 38) des Winkels (28) zugeordnet sind, orthogonal sind,
wobei jedes Achselstück (30) aufweist einen Stützsockel (42), eine erste Befestigungsplatte (44) und eine zweite Befestigungsplatte (46), wobei der Stützsockel (42) und jede Befestigungsplatte (44, 46) flach sind und sich jeweils in einer korrespondierenden Ebene erstrecken, wobei die Ebenen, die dem Stützsockel (42) und jeder Platte (44, 46) zugeordnet sind, paarweise orthogonal sind, wobei die Befestigungsplatten (44, 46) bezüglich des Stützsockels (42) vorstehen an einer gleichen Seite bezüglich der Ebene, die dem Stützsockel (42) zugeordnet ist, wobei die erste Befestigungsplatte (44) eine Zunge (48) aufweist, die rechtwinkelig vorsteht bezüglich der Ebene der erste Befestigungsplatte (44), um sich der zweiten Befestigungsplatte (46) gegenüberliegend zu erstrecken in Kontakt mit der Fläche der zweiten Platte (46), die zu der ersten Befestigungsplatte (44) hingewandt ist.

2. Struktur (2) gemäß Anspruch 1, **dadurch gekennzeichnet, dass** die Profilelemente (4) mittels Extrusion realisiert sind.

3. Struktur (2) gemäß Anspruch 1 oder 2, **dadurch gekennzeichnet, dass** die Profilelemente (4) einen rechteckigen oder quadratischen Radialquerschnitt haben.

4. Struktur (2) gemäß irgendeinem der vorhergehenden Ansprüche, **dadurch gekennzeichnet, dass** die Elemente zum Zusammenbau (6) mittels Nieten (8) mit den Profilelementen (4) verbunden sind.

5. Struktur (2) gemäß irgendeinem der vorhergehenden Ansprüche, **dadurch gekennzeichnet, dass** jedes Element zum Zusammenbau (6) in einem Endbereich (18) eines ersten Profilelements (4) und an der Außenwand (16) eines zweiten Profileelements (4) befestigt ist in Kontakt mit dem Endbereich (18) und mit der Außenwand (16).

6. Struktur (2) gemäß irgendeinem der vorhergehenden Ansprüche, **dadurch gekennzeichnet, dass** wenigstens ein Element zum Zusammenbau (6) realisiert ist durch Biegen eines flachen Blechs.

7. Struktur (2) gemäß irgendeinem der vorhergehenden Ansprüche, **dadurch gekennzeichnet, dass** drei Profilelemente (4) miteinander verbunden sind auf Höhe ihres Endbereichs (18) zum Bilden einer Ecke (52) der Struktur (2), wobei die Profileelemente (4) paarweise verbunden sind durch wenigstens ein Element zum Zusammenbau (6), wobei wenigstens eins der Elemente zum Zusammenbau (6) einen Sockel (42) aufweist, der imstande ist, an einer Trägerfläche eines Schienenfahrzeugs befestigt zu werden.

8. Struktur (2) gemäß irgendeinem der vorhergehenden Ansprüche, **dadurch gekennzeichnet, dass** die Profilelemente (4) und die Elemente zum Zusammenbau (6) realisiert sind aus einem elektrisch leitenden Material, bevorzugt aus Metall, insbesondere aus Aluminium.

9. Struktur (2) gemäß irgendeinem der vorhergehenden Ansprüche, **dadurch gekennzeichnet, dass** die Profilelemente (4) und die Elemente zum Zusammenbau (6) behandelt sind mittels einer Antioxidier-Flächenbehandlung.

10. Schienenfahrzeug, **dadurch gekennzeichnet, dass** es aufweist wenigstens eine Struktur (2) gemäß irgendeinem der vorhergehenden Ansprüche zum Aufnehmen wenigstens einer elektrischen Installation.

## Claims

1. A structure (2) for an electrical installation of a rail vehicle, of the type comprising a plurality of profiled elements (4) each extending along a longitudinal axis and forming a framework of the structure (2), and a plurality of assembly elements (6) for assembling the profiled elements (4) relative to one another, the profiled elements forming a first base (10), a second base (12) and a body (14) connecting the bases (10, 12) to one another, the profiled elements (4) being each in a single piece including an integral outer wall (16), with a closed and continuous radial section,
the structure comprising at least one profiled element forming a crosspiece (58) between a first profiled element (4M) and a second profiled element (4N), the first and second profiled elements (4M, 4N) belonging to the body,
**characterized in that** the plurality of assembly elements (6) are made up of only three models of different assembly elements, and the structure (2) not including assembly elements (6) other than those three models,
the three models of assembly elements being plates (26), brackets (28) and gussets (30),
each plate (26) being a planar L-shaped piece, each plate (26) including a first branch (32) and a second branch (34), the first branch (32) and the second branch (34) each extending along a longitudinal axis, the longitudinal axes being orthogonal relative to one another,
each bracket (28) comprising a first planar blade (36) and a second planar blade (38) joined at an edge (40), each blade (36, 38) of the bracket (28) extending in a plane along a longitudinal axis (Y1-Y1, Y2-Y2), said longitudinal axes (Y1-Y1, Y2-Y2) being orthogonal to one another, the planes respectively associated with each of the blades (36, 38) of the bracket (28) being orthogonal,
each gusset (30) including a support base (42), a first fastening plate (44) and a second fastening plate (46), the base (42) and each fastening plate (44, 46) being planar and each extending in a corresponding plane, the planes associated with the base (42) and with each plate (44, 46) being orthogonal in pairs, the fastening plates (44, 46) protruding, relative to the support base (42), on a same side relative to the plane associated with the support base (42), the first fastening plate (44) including a tongue (48) protruding in a bracket relative to the plane of the first fastening plate (44) to extend across from the second fastening plate (46), in contact with the face of the second plate (46) that is oriented toward the first fastening plate (44).

2. The structure (2) according to claim 1, **characterized in that** the profiled elements (4) are made by extrusion.

3. The structure (2) according to claim 1 or 2, **characterized in that** the profiled elements (4) have a rectangular or square radial section.

4. The structure (2) according to any one of the preceding claims, **characterized in that** the assembly elements (6) are connected to the profiled elements (4) by rivets (8).

5. The structure (2) according to any one of the preceding claims, **characterized in that** each assembly element (6) is fastened to an end zone (18) of a first profiled element (4) and the outer wall (16) of a second profiled element (4), in contact with said end zone (18) and said outer wall (16).

6. The structure (2) according to any one of the preceding claims, **characterized in that** at least one assembly element (6) is made by bending a planar metal sheet.

7. The structure (2) according to any one of the preceding claims, **characterized in that** three profiled elements (4) are connected to one another at their end zone (18) to form a corner (52) of the structure (2), the profiled elements (4) being connected in pairs to one another by at least one assembly element (6), at least one of the assembly elements (6) including a base (42) able to be fastened to a support surface of a rail vehicle.

8. The structure (2) according to any one of the preceding claims, **characterized in that** the profiled elements (4) and the assembly elements (6) are made from an electrically conductive material, preferably a metal, in particular aluminum.

9. The structure (2) according to any one of the preceding claims, **characterized in that** the profiled elements (4) and the assembly elements (6) are treated using an antioxidant surface treatment.

10. A rail vehicle, **characterized in that** it includes at least one structure (2) according to any one of the preceding claims to receive at least one electrical installation.
